# DEMANDE DE BREVET EUROPEEN

(11) **EP 1 738 933 A2**
(43) Date de publication de la demande: **03.01.2007**
(21) Numéro de dépôt: 06116212.9
(22) Date de dépôt: 28.06.2006
(51) Int. Cl.: B60C 17/06

(54) **Ensemble de roulage à pression reduite à boudin mousse integre.**

(30) Priorité: 30.06.2005 FR 0506752; 19.10.2005 FR 0510726
(71) Demandeur: Societe de Technologie Michelin, 63000 Clermont-Ferrand (FR); MICHELIN Recherche et Technique S.A., 1763 Granges-Paccot (CH)
(72) Inventeur: Tramond, Philippe, 63230, SAINT OURS LES ROCHES (FR)
(74) Mandataire: Lasson, Cédric Y. M.

(57) **Abrégé**

Boudin mousse (5) destiné à occuper l'espace intérieur formé par un pneumatique (2) et une jante (3) dotée d'une valve de gonflage (4), comportant un conduit (53), dont les parois sont étanches à l'air, et qui chemine à l'intérieur du volume dudit boudin mousse (5) caractérisé en ce que un drain (56) est disposé à l'intérieur du conduit (53).

## Description

L'invention concerne les ensembles de roulage à plat destinés à équiper les véhicules automobiles. Ces ensembles comportent une jante dotée d'une valve, un pneumatique, et enferment un boudin de forme approximativement toroïdale. Ce boudin, plus communément dénommé boudin mousse, est généralement réalisé en caoutchouc alvéolaire à cellules fermées. Il est destiné à supporter la charge en cas de perte de pression du pneumatique. Les cellules peuvent, dans certains cas, contenir un gaz sous pression.

Des dispositifs de sécurité de ce type sont connus de l'art antérieur, et de nombreuses variantes de réalisation ont été proposées. L'une d'entre elles est divulguée dans le brevet FR 1 450 638 qui en expose le principe de fonctionnement et décrit le comportement du boudin mousse sous l'effet de la force centrifuge. Cette publication propose également d'améliorer la tenue du boudin mousse sur la jante en se servant de la pression de gonflage pour maintenir le boudin mousse plaqué contre la jante.

Pour obtenir cet effet, il est proposé de placer une membrane annulaire étanche, ou encore un opercule étanche, à l'interposition entre chacun des flancs du boudin et la paroi intérieure de chacun des bourrelets de l'enveloppe afin de créer un premier compartiment en communication avec l'atmosphère, et un second compartiment placé à la pression d'utilisation du pneumatique. Ainsi, la face radialement intérieure du boudin est en contact avec la pression atmosphérique, et la pression de gonflage agit sur la face radialement extérieure du boudin.

De la différence de pression entre les deux compartiments, il résulte une force dirigée radialement vers l'intérieur agissant sur le boudin mousse et ayant pour effet de plaquer ledit boudin sur la jante, en comprimant le gaz contenu dans les cellules. L'action de la pression de gonflage a pour conséquence la réduction du volume dudit boudin, ce qui permet d'éviter tout contact entre la paroi interne du pneumatique et le boudin mousse. Cette force s'oppose également à la force centrifuge et participe au maintien du boudin en position contre la jante lorsque le véhicule atteint une vitesse élevée.

Lorsque la pression dans l'enveloppe passe en dessous d'un certain seuil, le boudin mousse reprend sa forme naturelle en occupant tout le volume intérieur de l'enveloppe, et participe ainsi au maintien du pneumatique.

Il s'avère en effet que le bon fonctionnement de ces ensembles est lié à la qualité du positionnement de la membrane annulaire et à la réalisation de la liaison étanche de ladite membrane annulaire avec la paroi intérieure des bourrelets du pneumatique. Ce qui peut représenter un certain nombre d'inconvénients lors des opérations de montage et de démontage.

L'objet de la présente invention est de proposer un ensemble simplifié, permettant de s'affranchir de ces problèmes, et dans lequel le pneumatique et le boudin mousse sont solidaires.

Cet ensemble se caractérise en ce que la base de chacun des flancs du boudin mousse est collée de manière étanche et sur toute la longueur de sa circonférence sur une partie de la surface intérieure de chacun des bourrelets du pneumatique avec laquelle elle est placée en vis à vis.

La liaison étanche obtenue par le collage du boudin mousse avec le pneumatique, permet de séparer le premier compartiment en contact avec l'atmosphère et le second compartiment porté à la pression de gonflage.

Ce mode de réalisation particulier est rendu possible par l'ajout d'un canal cheminant à l'intérieur du boudin mousse, relié par une de ses extrémités à la valve de gonflage, et débouchant par une autre de ses extrémités dans le second compartiment.

La publication EP 0748 706 décrit un ensemble comportant un pneumatique et un support interne en mousse dont les bords sont collés à la paroi interne du pneumatique et dans lequel chemine un canal. Toutefois, cette publication ne traite pas du problème spécifique des ensembles utilisant la pression de gonflage pour maintenir un boudin mousse expansible en place.

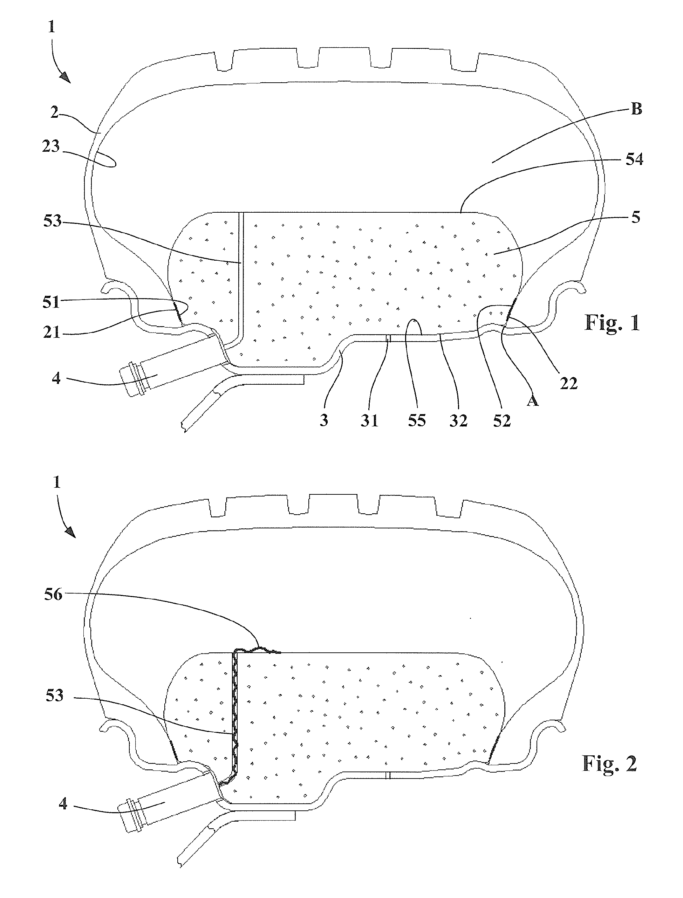

La description qui suit a pour objet de présenter un exemple d'application de l'invention en s'appuyant sur les figures 1 et 2 dans lesquelles :
- La figure 1 représente une coupe radiale d'un ensemble conforme à l'invention
- La figure 2 représente une configuration particulière du second conduit.

La figure 1 représente une coupe radiale d'un ensemble 1 comportant un pneumatique 2, monté sur une jante 3. Un boudin mousse 5 est disposé dans l'espace intérieur situé entre la paroi du pneumatique 23 et la paroi radialement externe 32 de la jante 3.

La base de chacun des flancs 51 et 52 du boudin mousse est collée de manière étanche à la partie de la surface intérieure de chacun des bourrelets 21 et 22 du pneumatique 2 avec laquelle elle est placée en vis-à-vis. La liaison entre ces deux parties est réalisée sur la longueur totale de la circonférence de manière à constituer deux compartiments A et B isolés l'un de l'autre. Ce collage est effectué en employant les techniques habituelles de collage de produits fabriqués à base de matériaux caoutchoutiques entre eux.

Ainsi, en complément des forces de pression venant plaquer le boudin mousse sur la jante, le joint collé procure un supplément de résistance favorisant le maintien du boudin mousse au contact de la jante lors de l'augmentation des forces centrifuges liées à la vitesse de roulage.

Le premier compartiment A situé entre la semelle 55 du boudin mousse 5 et la paroi radialement externe 32 de la jante 3 est en communication avec la pression atmosphérique par l'intermédiaire d'une prise d'air 31. Le second compartiment B est délimité par la surface interne 23 du pneumatique 2 et la surface radialement externe 54 du boudin mousse. Un conduit 53 relie le compartiment B à la valve 4. Le conduit 53 étant situé dans le volume même du boudin mousse, il n'y a aucune difficulté à obtenir un joint étanche entre la paroi de la base des flancs 51 et 52 du boudin mousse et la paroi interne 21 et 22 du bourrelet.

De préférence la surface radialement externe 54 du boudin mousse 5 est rendue étanche à l'air au même titre que la surface interne 23 du pneumatique 2 de façon à ce que le compartiment B puisse être maintenu à la pression de gonflage. Cette propriété est généralement obtenue sans peine en choisissant un matériau à base de butyle pour la réalisation de la paroi extérieure du boudin mousse.

Le conduit 53 est réalisé de telle manière qu'il chemine dans le volume du boudin mousse 5. Ce second conduit est apte à être connecté par une de ses extrémités à ladite valve de gonflage (4) et débouche à l'autre de ses extrémités dans le compartiment B, soit sensiblement sur la partie du boudin mousse placée en vis-à-vis de la paroi interne du pneumatique située au dessus des bourrelets dudit pneumatique. Les parois de ce second conduit seront de préférence étanches à l'air.

Toutefois la réalisation de ce conduit 53 doit être entreprise avec le plus grand soin de manière à ce qu'il ne soit pas obturé lors de la montée en pression ou lors du dégonflage du compartiment B. En effet, la mise en pression a pour effet de comprimer le boudin mousse et de provoquer des déformations du conduit 53. En pratique on a observé qu'un conduit de forme circulaire sensiblement radial, permettait d'obtenir des résultats satisfaisants. Le diamètre de ce second conduit est d'environ 3 à 5 mm lorsque le boudin mousse est libre.

Le mode de réalisation, tel qu'illustré à la figure 2, consiste à disposer un drain 56 dans le conduit 53 de manière à permettre le passage de l'air, quelles que soient les déformations du boudin mousse. Le drain 56 est constitué par exemple, d'un fil textile.

La réalisation de ce conduit 53 se fait sans difficulté lors de la fabrication du boudin mousse. On dispose à cet effet une aiguille en métal de forme adaptée dans l'ébauche du boudin mousse avant vulcanisation. Cette tige peut facilement être extraite après la mise en forme définitive du boudin mousse en raison de la grande souplesse du matériau généralement utilisé et de l'augmentation du diamètre du conduit pendant l'expansion du boudin mousse. Il se forme alors une peau également étanche à l'air sur la surface du conduit.

Ce mode de fabrication est à préférer à celui qui consisterait à percer un canal dans la masse du boudin mousse. En effet, lors de cette opération les cellules de la mousse sont déchirées, ce qui a pour effet de créer des amorces de rupture préjudiciables à la durée de vie du boudin mousse lors d'un roulage à pression réduite.

La valve 4 est reliée à la sortie du conduit 53. Une forme préférentielle de réalisation consiste à coller la valve directement sur le boudin mousse au droit de la partie débouchant du conduit 53. Il est également tout à fait possible de disposer une base (non illustrée) comportant une rallonge creuse placée perpendiculairement au plan de la base et dans laquelle débouche le conduit 53. La valve 4 peut alors être accouplée à l'extrémité de la rallonge par vissage ou par tout autre moyen approprié.

On obtient alors un ensemble formé par le pneumatique 2 et le boudin mousse 5 qui présente la caractéristique de pouvoir être commercialisé sous cette forme, rendant alors plus commode et plus économique l'utilisation d'un ensemble de sécurité de ce type. En effet le monteur n'a plus à effectuer les opérations longues et délicates de mise en place et de collage d'une membrane étanche, et le pneumatique ainsi équipé peut être monté sur la jante selon un processus standard.

L'ensemble 1 comprenant une jante et un pneumatique rendu solidaire du boudin mousse présente également une meilleure sécurité, en ce que, lors d'un usage normal, le risque de perte de pression à l'intérieur du second compartiment B ne sont pas liés à une perte d'étanchéité au niveau de la séparation avec le premier compartiment A.

En cas de perforation de la bande de roulement, le boudin mousse se déploie à l'intérieur de la cavité du pneumatique et permet à l'usager de poursuivre sa route en toute sécurité afin de lui permettre de rejoindre un lieu d'assistance.On remarquera dans ces conditions, que les interventions de réparation se font par la surface externe de la bande de roulement.

Il va de soi que la forme de réalisation préférentielle de l'invention concerne la l'ensemble formé par le pneumatique et le boudin mousse rendu solidaires l'un de l'autre et commercialisés sous cette forme. Il demeure néanmoins possible, pour améliorer le roulage en mode dégonflé des véhicules, de mettre à disposition des monteurs qui le désirent un boudin mousse adapté pour être disposé dans un pneumatique et collé de manière étanche comme cela vient d'être décrit dans les paragraphes qui précèdent.

Ce boudin mousse a la particularité de comporter un conduit 53, sensiblement étanche à l'air et cheminant à l'intérieur de son volume intérieur.

L'assemblage du boudin mousse et du pneumatique est réalisé par le monteur lui-même qui devra disposer des moyens permettant de réaliser un collage étanche et de respecter les consignes liées à ce type d'opération et connues de l'homme du métier.

La méthode de montage, qui comprend l'ensemble des opérations d'assemblage du boudin mousse, du pneumatique et de la jante, comprend donc une étape consistant à coller de manière étanche et sur toute la longueur de sa circonférence la base des flancs 51, 52 du boudin mousse 5, sur une partie de la surface intérieure de chacun des bourrelets 21, 22 du pneumatique 2 avec laquelle elle est placée en vis à vis.

## Revendications

1. Boudin mousse (5) destiné à occuper l'espace intérieur formé par un pneumatique (2) et une jante (3) dotée d'une valve de gonflage (4), comportant un conduit (53), dont les parois sont étanches à l'air, et qui chemine à l'intérieur du volume dudit boudin mousse (5) **caractérisé en ce que** un drain (56) est disposé à l'intérieur du conduit (53).

2. Boudin mousse selon la revendication 1, dans lequel la surface radialement externe (54) du boudin mousse (5) est sensiblement étanche à l'air.

3. Boudin mousse selon l'une des revendications 1 ou 2, dans lequel ledit conduit (53) est apte à être connecté par une de ses extrémités à ladite valve de gonflage (4) et débouche à l'autre de ses extrémités sur la partie du boudin mousse (5) destinée à être placée en vis-à-vis de la paroi interne du pneumatique (23) située au dessus de la surface intérieure des bourrelets (21, 22) dudit pneumatique (2).

4. Ensemble (1) formé d'une roue comprenant une jante (3) dotée d'une valve de gonflage (4), d'un pneumatique (2) monté sur ladite jante de ladite roue, et d'un boudin mousse (5) placé à l'intérieur du volume délimité par la paroi interne du pneumatique (2) et la jante (3) de la roue, dans lequel la base de chacun des flancs (51, 52) du boudin mousse (5) est collée de manière étanche et sur toute la longueur de sa circonférence sur une partie de la surface intérieure de chacun des bourrelets (21, 22) du pneumatique (2) avec laquelle elle est placée en vis-à-vis, **caractérisé en ce qu'**il comprend un boudin mousse selon l'une des revendications 1 à 3.

5. Ensemble (1) selon la revendication 4, dans lequel le volume compris entre la jante et la semelle du boudin mousse forme un premier compartiment (A), en communication avec l'atmosphère par l'intermédiaire d'une prise d'air (31), et le volume compris entre la paroi intérieure (23) du pneumatique (2) et la surface radialement externe (54) du boudin mousse (5) forme un deuxième compartiment (B) étanche, communiquant avec la valve de gonflage (4) par l'intermédiaire du conduit (53), et gonflé à la pression d'utilisation du pneumatique.
